# EUROPEAN PATENT APPLICATION

(11) **EP 1 211 650 A2**
(43) Date of publication of application: **05.06.2002**
(21) Application number: 01128272.0
(22) Date of filing: 28.11.2001
(51) Int. Cl.: G07F 7/00, G07F 5/18, G07F 17/20

(54) **Management system and management method for fee-based service as well as recording medium on which program therefor is recorded**

(30) Priority: 29.11.2000 JP 2000363562
(71) Applicant: NEC CORPORATION, Tokyo (JP)
(72) Inventor: Ebata, Shinji, Tokyo (JP)
(74) Representative: Betten & Resch

(57) **Abstract**

A management system for a fee-based service includes a user side communication terminal (4), a business unit side communication terminal (1) connectable to the user side communication terminal (4) over a communication line (6), and a control and management apparatus (7) for communicating with the user side communication terminal (4) through the business unit side communication terminal (1), controlling a particular equipment and managing a service by which the particular equipment is utilized. The control and management apparatus (7) starts the service in which the particular equipment is utilized when the user inputs at least address information of the user side communication terminal (4) and pays a predetermined charge for the service and issues, when an event of the service comes to an end, a notification of the end of the event to the user side communication terminal (4), through which the address information has been inputted, through the business unit side communication terminal (1).

## Description

### BACKGROUND OF THE INVENTION

### Field of the Invention

The present invention relates to a management system and a management method for a fee-based service wherein a particular equipment of a business unit installed at a predetermined service providing place is utilized for pay by a user coming to the installation place and a recording medium on which a program for executing such management using a computer is recorded.

### Description of the Related Art

Conventionally, a great number of systems are available which are configured such that a user comes to a particular equipment provided at a predetermined service providing place by a predetermined service providing business unit, pays a predetermined charge and uses the equipment to execute predetermined processing or operation to acquire a service result. Such systems are utilized suitably by individual users in accordance with their objects.

As such service forms, for example, a coin laundry, a car washing equipment, a printing-copying corner, a rice mill shop and so forth are available. Such equipments are in most cases unmanned equipments, and most of them require a considerably long time until a user acquires a service result after it renders the equipment operative. This inevitably increases such opportunities that the user temporarily leaves the site while the service is proceeding with the equipment to perform some other business.

For example, where a user uses a coin laundry, after the user places the washing into a washing machine and renders the washing machine operative, that is, after the washing machine is switched on, usually a washing time of 30 minutes to one hour is required although the processing time depends upon the ability and the capacity of the washing machine, the amount of the washing and so forth. Therefore, the user is likely to often go, for example, for shopping to a shop such as a convenience store in the neighborhood or to a game center to play a game to make the most of the waiting time.

However, the user is likely to forget or mistake the washing ending time of the coin laundry. As a result, the user is requested to pay an additional excess charge, and to the business unit of the coin laundry, the effective utilization factor of the equipment is deteriorated.

As another problem, it often occurs that, for example, although a user goes to a coin laundry, all washing machines of the coin laundry are used by other users and the user is obliged to wait for a long time in the coin laundry. Thus, the user is obliged to spend wasteful time.

Such problems as described above occur not only with a coin laundry but also with such other services as given above.

### SUMMARY OF THE INVENTION

It is an object of the present invention to provide a management system and a management method for a fee-based service by which an efficient service free from wasteful time can be provided to both of a business unit which provides the service and a user who makes use of the service.

In order to attain the object described above, according to an aspect of the present invention, there is provided a management system for a fee-based service wherein a particular equipment of a business unit provided at a predetermined service providing place is used with payment of a charge by a user who comes to the service providing place at which the equipment is provided, comprising a user side communication terminal, a business unit side communication terminal connectable to the user side communication terminal over a communication line, and control and management means for communicating with the user side communication terminal through the business unit side communication terminal, controlling the particular equipment and managing a service by which the particular equipment is utilized, the control and management means being operable to start the service in which the particular equipment is utilized when the user inputs at least address information of the user side communication terminal and pays a predetermined charge for the service and issue, when an event of the service comes to an end, a notification of the end of the event to the user side communication terminal, through which the address information has been inputted, through the business unit side communication terminal.

Preferably, the control and management means permits, if the user receiving the notification of the end of the event of the service comes to the service providing place and inputs unique user identification information determined in advance, the user to acquire a result of the service from the particular equipment.

Preferably, the user identification information includes address information regarding the user side communication terminal such as, for example, a telephone number or an E main address.

The user side communication terminal is a mobile communication terminal or a portable digital assistant having a communication function.

Preferably, the user identification information includes address information regarding the user side communication terminal and a unique number determined by the user individually in order to assure the security.

The control and management means may impose, if the user does not acquire the result of the service from the particular equipment after the notification of the end of the event is issued, an excess charge corresponding to a period of time from a point of time when a predetermined time elapses after the issuance of the notification of the end of the event to another point of time at which the user inputs the user identification information, and permit the user to acquire the result of the service from the particular equipment after the user pays the excess charge.

The control and management means may increase the excess charge stepwise in accordance with the excess time.

The control and management means may issue a notification of a request for reception of the result of the service to the user and alarm information representing imposition of the excess charge to the user side communication terminal at predetermined intervals of time from the point of time at which the predetermined time elapses after the issuance of the notification of the end of the event.

The control and management means may place, when a predetermined time determined in advance elapses while the user does not acquire the result of the service after the end of the event, the result of the service into custody to return the particular equipment into a state wherein another user can utilize the particular equipment.

Payment of the charge to the control and management means may be performed by an accounting system through the communication line, or through use of a cash card, a credit card, an electronic payment system or a prepaid card or by throwing in of money.

The user side communication terminal may send a notification at least of an identification number unique to the user and an account number of a financial organ from which a predetermined amount of money is to be paid to the business unit side communication terminal.

Preferably, the control and management means normally grasps a utilization situation of the service and stores information regarding the utilization situation into storage means.

The control and management means may manage a plurality of equipments by the same business unit provided in different districts.

Preferably, the control and management means issues, if an inquiry is received from the user side communication terminal through the communication line, a notification of information regarding an equipment which can be utilized to the user side communication terminal through the business unit side communication terminal.

The control and management means may assure, if an equipment which can be utilized on a date designated by the user is present, the equipment as a reserved equipment for the user.

The control and management means may issue, when the reservation is completed, a notification of a result of the reservation to the user side communication terminal through the business unit side communication terminal.

Preferably, the control and management means displays, if the utilization reservation is established, information that the equipment is reserved.

The control and management means may set a reservation charge separately for the request for reservation.

The control and management means may impose a reservation cancellation fine if the user does not utilize the reserved service even after a time determined in advance elapses from a predetermined hour of the date of the reservation by the user.

Where such a reservation service as described above is provided, the user can come to the desired service providing place on the desired date to enjoy the predetermined service and can therefore eliminate spending of wasteful time.

Preferably, the control and management means includes a failure situation discrimination section for supervising a utilization situation of services to discriminate presence or absence of a service which is in failure, and issues a notification for request for maintenance of the service to a communication terminal of a predetermined maintenance business unit for the predetermined service which has been discriminated to be in failure.

The business unit communication terminal may have a server function and form an application service provider.

The control and management means may include user information inputting means, user information storage means, service function driving control means, timer means, user identification information confirmation means, payment confirmation means for confirming reception of payment of a predetermined charge, service operation means operable by the user, information origination means for originating predetermined information to the user side communication terminal, application storage means in which a program for causing a function of a service to be executed is stored, and control means for controlling some or all of the components of the control and management means.

The control and management means may further include situation discrimination means for discriminating a situation of the service at present, and storage means for storing a result of the discrimination by the situation discrimination means.

The control and management means may further include imposed charge amount calculation means for calculating an excess charge other than a basic charge regarding utilization of the service.

At least the information origination means may be provided in a server possessed by a business unit.

The situation discrimination means for discriminating a situation of the service at present and the storage means for storing a result of the discrimination by the situation discrimination means may be provided in a server possessed by a business unit.

Where the particular equipment of the business unit is a washing machine of a coin laundry, the fee-based service may be that the user uses the washing machine with payment of a charge to wash the washing.

According to another aspect of the present invention, there is provided a management method for a fee-based service for controlling, by a control and management system, a particular equipment of a business unit provided at a predetermined service providing place so that a user can use the particular equipment with payment of a charge and managing the service by the control and management system, comprising the steps of starting, when the user inputs at least address information of a user side communication terminal and pays a predetermined charge for the service to the control and management system, operation of the service inwhich the particular equipment is utilized and locking the particular equipment to inhibit use of the particular equipment by another person, issuing, when an event of the service comes to an end, a notification of the end of the event to the user side communication terminal, through which the address information has been inputted, through a business unit side communication terminal, and permitting, if the user inputs unique user identification information to the control and management system, the user to acquire a result of the service from the particular equipment.

According to a further aspect of the present invention, there is provided a recording medium on which a program for controlling, by a control and management system, a particular equipment of a business unit provided at a predetermined service providing place so that a user can use the particular equipment with payment of a charge and managing the service by the control and management system, the program comprising the steps of the management method specified as above.

In the present invention, the basic charge for utilization of the service is determined taking at least one factor selected from among the type, the time of use, the capacity of the service, the difficulty of an applied technique to the service, the amount of a result of the service and so forth into consideration.

With the management system and the management method for a fee-based service and a recording medium on which the program for the management method is recorded, a service can be provided which is advantageous to both of a business unit which provides the service and a user who utilizes the service in that it provides no wasteful time and is therefore efficient.

The above and other objects, features and advantages of the present invention will become apparent from the following description and the appended claims, taken in conjunction with the accompanying drawings in which like parts or elements are denoted by like reference symbols.

### BRIEF DESCRIPTION OF THE DRAWINGS

FIG. 1 is a block diagram of a management system for a fee-based service to which the present invention is applied;
FIG. 2 is a block diagram showing an example of a configuration of a control and management apparatus shown in FIG. 1;
FIGS. 3 and 4 are flow charts illustrating an example of a control and management procedure executed by the control and management apparatus shown in FIG. 2; and
FIGS. 5A and 5B are schematic views showing an example of a message displayed on a screen of a user side communication terminal in the management system of FIG. 1, and wherein FIG. 5A shows an example of a display that washing comes to an end and FIG. 5B shows an example of a warning that a fixed period of time elapses after the end of washing.

### DESCRIPTION OF THE PREFERRED EMBODIMENT

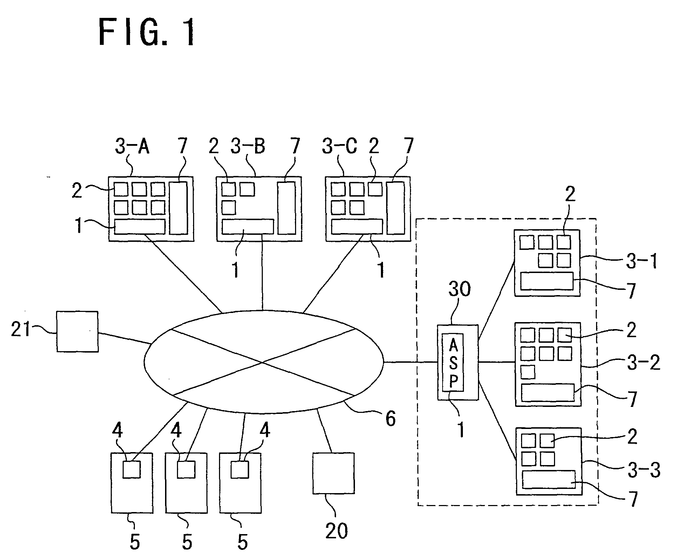

Referring first to FIG. 1, there is shown an example of a configuration of a management system according to the present invention where it is applied to a coin laundry. The management system includes several coin laundries 3-A, 3-B and 3-C each of which in turn includes a plurality of washing machines 2, a control and management apparatus 7 for controlling the washing machines 2 using a computer and managing services under the control of the computer, and a business unit side communication terminal 1 for communicating with the outside. The coin laundries 3-A, 3-B and 3-C are connected to a communication line 6 by radio or by a wire each by means of the communication terminal 1.

Meanwhile, each of other coin laundries 3-1, 3-2 and 3-3 includes a plurality of washing machines 2 and a control and management apparatus 7 including a computer. However, the coin laundries 3-1, 3-2 and 3-3 are connected to the communication line (network) 6 by a business unit side communication terminal 1 provided in a center 30 and having a server function.

The coin laundries 3-A, 3-B and 3-C are administrated by a same business unit while the coin laundries 3-1, 3-2 and 3-3 are administrated by another same business unit. The former business unit and the latter business unit may be the same business unit or different business units.

Each of the business unit side communication terminal 1 can communicate with any of user side communication terminals 4 owned by users 5 and also with a communication terminal 20 of a repair trader and an accounting system 21.

The communication line 6 is a network which uses a wire or wireless communication or both of wire and wireless communications and preferably forms the Internet. The business unit side communication terminal 1 provided in the center 30 preferably forms an application service provider (ASP).

The user side communication terminal 4 may be any communication terminal having a wire or wireless communication function such as a desk top personal computer, a notebook type personal computer, a mobile type personal computer, a portable telephone set, a PHS (Personal Handyphone System) telephone set, a portable digital assistant (PDA) or a game terminal. Preferably, however, a communication terminal having an Internet connection function is used.

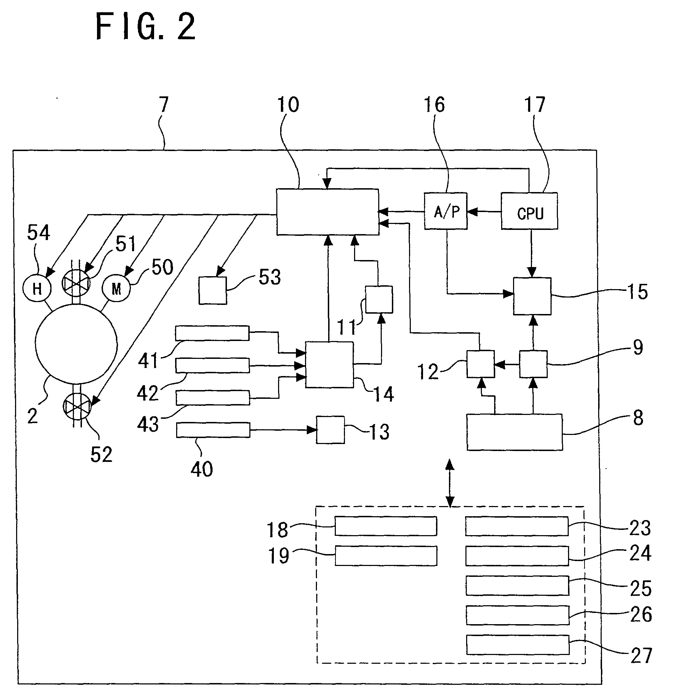

FIG. 2 shows an example of a configuration of the control and management apparatus 7. Referring to FIG. 2, the control and management apparatus 7 shown includes at least a user identification information inputting section 8 formed from a keyboard or the like, a user identification information storage section 9 for storing the number such as, for example, a telephone number of the user side communication terminal 4 of the user, an E mail address, a password unique to the user and so forth inputted from the inputting section 8, a service function driving control section 10 for controlling a motor 50, a feed-water valve 51 and a drain valve 51, a heater 54, a door locking mechanism 53 and so forth of the washing machines 2 in accordance with a predetermined program, a timer section 11, a payment confirmation section 13 connected to a coin or card slot 40, a pair of switch sections 42 and 43 operable by a user for opening and closing the door of any washing machine 2 or turning driving of the motor 50 on and off, an operation section 14 connected to a display unit or the like for displaying an operation condition or an explanation of an operation procedure, a user identification information confirmation section 12 for discriminating, when the operation of the washing machine 2 comes to an end and the user inputs the user identification information of the user itself to the user identification information inputting section 8 again in order to receive the washing of the user itself which is a result of the service, whether or not the inputted user identification information coincides with the user identification information which was inputted first by the user, an information origination section 15 for originating, for example, when the operation time of a washing machine 2 comes to an end, information of this to the user side communication terminal 4 using the business unit side communication terminal 1 in order to notify the user of the fact, an application program storage section 16 in which a program for causing the functions of the washing machine 2 to be performed is stored, and a CPU (Central Processing Unit) 17 serving as arithmetic operation and control section for generally controlling all or some of the components mentioned above.

The notification to the user side communication terminal 4 is performed with one, two or more of voice, an image and characters.

As regards payment of a charge, the accounting system may be utilized to perform electronic settlement if a user uses the user side communication terminal 4 to issue in advance a notification of a password unique to the user and an account number of a financial organ from which the charge should be paid.

The control and management apparatus 7 includes a charge storage section 18 for storing a basic charge when a user uses a washing machine 2, an excess charge imposed when a predetermined time to which the basic charge is applied elapses, and a subscription deposit, a fine against cancellation of a reservation or the like for reservation of a washing machine 2, a charged money amount calculation section 19 for calculating an excess charge or a reservation cancellation fine against non-use at a reserved time, a service utilization situation discrimination section 23 for discriminating a situation at present of a service, a service utilization situation information storage section 24 for storing a result of the discrimination of the service utilization situation discrimination section 23, a service free situation discrimination section 25 for discriminating a free situation of a service, a reservation situation storage section 26 for storing a reservation situation of a service, and a failure situation discrimination section 27 for supervising the utilization situation of services to discriminate whether or not there is present a service which is in failure.

It is to be noted that it is possible to include various storage sections including the information origination section 15 not in the control and management apparatus 7 but in the business unit side communication terminal 1 which forms a server or an application service provider.

The basic charge regarding utilization of the washing machine 2 is determined taking at least one factor selected from among the capacity of a washing machine 2, time of use of a washing machine 2, the weight of the washing, the number of times of washing and/or rinsing and so forth into consideration.

Further, although the operation time of a washing machine 2 can be varied in accordance with the taste of the user, it is preferable that usually the basic time is automatically set to a time from 30 minutes to one hour in accordance with the weight, and the thus set time is managed by the timer section 11 such that the operation of the washing machine 2 is stopped in response to completion of counting up of the timer section 11.

If the user does not acquire the result of the service from the washing machine place with payment of a predetermined charge within a predetermined time after an event end notification that the operation of the washing machine 2 comes to an end is received, then an excess charge corresponding to the time taken from a point of time at which the predetermined time elapses after the event end notification to another point of time at which the user inputs user identification information to the control and management apparatus 7 is imposed, and after the user 5 pays the excess charge, the user can acquire the washing which is the result of the service.

After the control and management apparatus 7 confirms payment of the excess charge by the user, it unlocks the door of the washing machine 2 used by the user by means of the door locking mechanism 53. However, as long as the excess charge is not paid, the door is not unlocked.

It is to be noted that the excess charge may otherwise increase in response to the time elapsed after the point of time at which the predetermined time elapses after the event end notification. For example, the excess charge is set in such a manner that, when 10 minutes elapse, X yen is imposed, and when the elapsed time ranges from 10 minutes to 20 minutes, 2X yen is imposed and then when the elapsed time ranges from 20 minutes to 30 minutes, 3X yen is imposed, and a sum total of such applicable excess amounts is calculated and requested as an applicable excess charge.

The control and management apparatus 7 successively issues a notification of alarm information for the request for reception of the washing and for the imposition of an excess charge from the business unit side communication terminal 1 to the user side communication terminal 4 at predetermined intervals of time from a point of time at which the predetermined time elapses after the operation end notification of the washing machine 2.

Further, if the user does not come to receive the washing and the elapsed time exceeds the predetermined time, for example, 30 minutes although a notification of the predetermined alarm information is issued after the end of the event, then the control and management apparatus 7 is placed into custody and unlocks the door of the washing machine 2 to return the washing machine 2 into a state wherein it can be utilized by another user.

The control and management apparatus 7 discriminates a utilization situation at present of each of the washing machines 2 managed thereby by means of the service utilization situation discrimination section 23 and stores the service utilization situation information at present and in the past into the service utilization situation information storage section 24. Then, if a user uses the user side communication terminal 4 to inquire through the communication line 6 and the business unit side communication terminal 1 what service is available on a desired date, then the service utilization situation discrimination section 23 confirms whether or not there is a service available on the desired date of the user. If there is a service available on the date desired by the user, then a notification of the information that the desired service is available is issued to the user side communication terminal 4 through the business unit side communication terminal 1 and the communication line 6.

Further, if a user reserves use of a particular service on a designated date through the communication line 6 and the business unit side communication terminal 1, then the control and management apparatus 7 discriminates free information by means of the service free situation discrimination section 25 for discriminating a free state of a service and registers, if it detects a free service, the reservation information into the reservation situation storage section 26. Then, the control and management apparatus 7 issues a notification of the success of the reservation to the user side communication terminal 4 through the business unit side communication terminal 1 and the communication line 6.

If the user does not utilize the reserved particular service even after a predetermined time elapses after a predetermined hour of the reserved date, then the control and management apparatus 7 imposes the reservation cancellation charge and releases the reserved service to another user.

Further, the control and management apparatus 7 supervises a utilization situation of a service for each of the washing machines 2 managed thereby using the failure situation discrimination section 27 to discriminate whether or not there is a service which is in failure. Then, the control and management apparatus 7 displays, with regard to the service which has been discriminated to be in failure, that the service is in failure, and locks the service so that the service may not be utilized. Then, the control and management apparatus 7 issues a notification for request for repair of exchange of the service having discriminated to be in failure to the communication terminal 20 of the repair trader through the business unit side communication terminal 1 and the communication line 6. After the repair or the exchange of the service is completed, the control and management apparatus 7 unlocks the service.

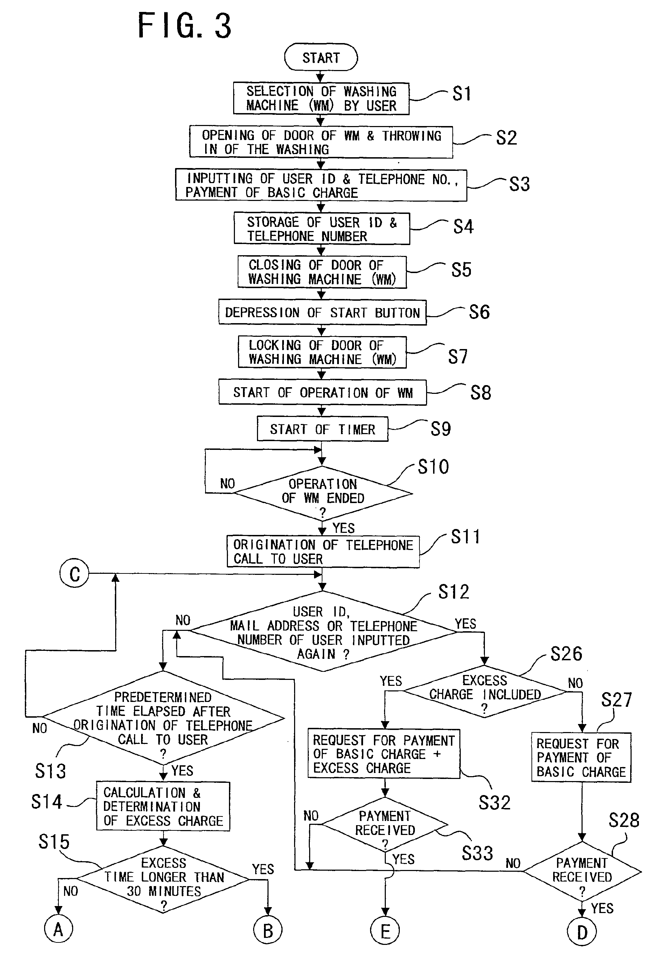

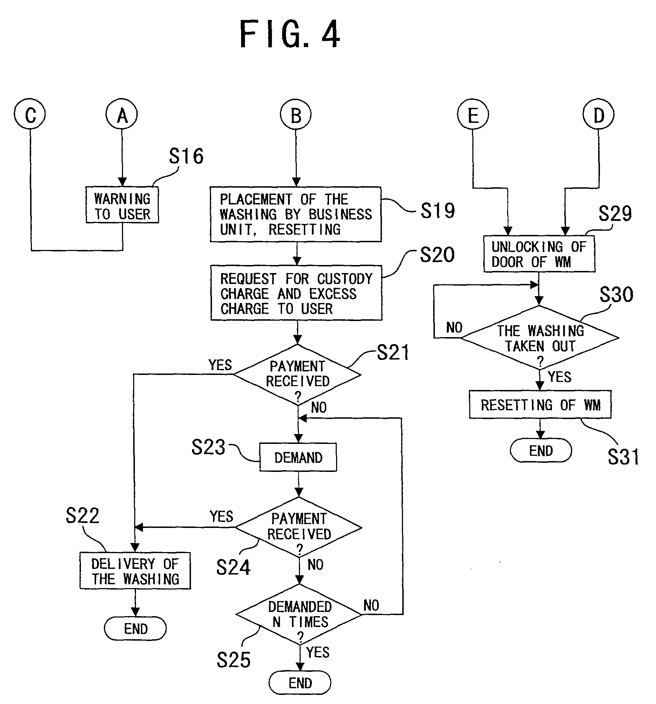

In the following, an example of a control and management procedure executed by the control and management apparatus 7 is described with reference to flow charts of FIGS. 3 and 4.

Referring first to FIG. 3, after the procedure is started, a user selects a particular washing machine 2 in step S1, and opens the door of the washing machine 2 using a suitable switch or by a manual operation and throws the predetermined washing into the washing machine 2 in step S2.

Then in step S3, the control and management apparatus 7 closes the door of the washing machine 2, and then if a predetermined charge is thrown into the coin or card slot 40 or a card of the user registered in advance is inserted into the coin or card slot 40 to pay the predetermined charge and simultaneously the number of the user side communication terminal 4, an E-mail address, an ID number and so forth are inputted as user identification information using the keyboard of the user identification information inputting section 8, then the inputted user identification information of the user is stored into the user identification information storage section 9 in step S4.

Then, the processing advances to step S5, in which the user closes the door of the washing machine 2, and then to step S6, in which the user depresses the start switch of the washing machine 2. Consequently, the washing machine 2 is energized and simultaneously the door of the washing machine 2 is locked by the door locking mechanism 53 in step S7.

Then in step S8, operation of the washing machine 2 is started, and then the timer section 11 is started in step S9.

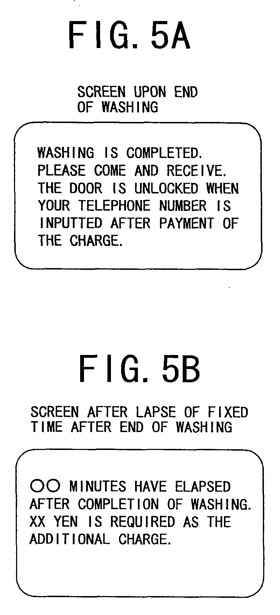

Thereafter, it is discriminated in step S10 whether or not the operation of the washing machine 2 comes to an end. If the discrimination in step S10 is NO, then step S10 is repeated. Then, if the discrimination in step S10 changes to YES, then the processing advances to step S11, in which a telephone call to the user side communication terminal 4 inputted in advance is originated to notify the user of the end of the operation of the washing machine 2. FIG. 5A shows an example of a message which is displayed on the screen of the user side communication terminal 4 in response to the notification.

The discrimination of whether or not the operation of the washing machine 2 comes to an end is not particularly specified. However, several phenomena may be utilized for the discrimination. For example, that the motor 50 of the washing machine 2 stops, that execution of the last program portion of the driving program for the washing machine 2 is completed, that counting of a predetermined time by the timer section 11 is completed or that the power supply to the washing machine 2 is disconnected may be used for the discrimination.

Thereafter, it is discriminated in step S12 whether or not the user identification information is inputted again. If the discrimination in step S12 is NO, then it is discriminated in step S13 whether or not a fixed time such as, for example, 10 minutes elapses after the issuance of the notification of the operation end of the washing machine 2. Then, after the fixed time elapses, an excess time is calculated and also an excess charge is determined in step S14.

Thereafter, the processing advances to step S15, in which it is discriminated whether or not the excess time is longer than 30 minutes. If the discrimination in step S15 is NO, then the excess charge amount of money and a warning are sent to the user side communication terminal 4 in step S16 of FIG. 4. FIG. 5B shows an example of a message for such warning displayed on the screen of the user side communication terminal 4 in this instance. Thereafter, the processing returns from step S16 of FIG. 4 to step S12 of FIG. 3 to repeat such a procedure as described above.

On the other hand, if the discrimination in step S15 of FIG. 3 is YES, then the processing advances to step S19 of FIG. 4, in which the washing of the user is placed into custody and the washing machine 2 which has been used is reset so as to be released to utilization of another user. Then in step S20, a notification of the fact that the washing has been placed into custody and a request for the excess charge and a predetermined custody charge are sent to the user.

Then in step S21, it is discriminated whether or not the requested total charge is paid by the user. If the discrimination in step S21 is YES, then if the user receives the washing in step S22 which is hereinafter described, then the program of the control and management apparatus 7 is ended. However, if the discrimination in step S21 is NO, then a demand for payment is sent to the user in step S23. Then, it is discriminated in step S24 whether or not the charge is paid from the user. If the discrimination in step S24 is YES, then the processing returns to step S22, in which delivery of the washing to the user is executed. However, if the discrimination in step S24 is NO, then it is discriminated in step S25 whether or not the demand for payment has been issued by more than N times. If the discrimination in step S25 is NO, then the processing returns to step S23 so that the processing beginning with step S23 described above is repeated. However, if the discrimination in step S25 is YES, then later use by the user is inhibited and the processing is ended.

On the other hand, if the discrimination in step S12 of FIG. 3 is YES, then the processing advances to step S26, in which it is discriminated whether or not the charge to be paid by the user includes an excess charge. If the discrimination in step S26 is NO, then a demand for the basic charge is issued in step S27, and then in step S28, it is discriminated whether or not the basic charge is paid by the user. The payment of the basic charge and/or the excess charge can be performed through electronic settlement using the accounting system 21 on the communication line 6.

If the discrimination in step S28 of FIG. 3 is YES, then the processing advances to step S29 of FIG. 4, in which the door of the washing machine 2 is locked. Then in step S30, it is discriminated whether or not the user has taken out the washing from the washing machine 2. If the discrimination in step S30 is NO, then step S30 is repeated. Then, if the discrimination in step S30 changes to YES, then the washing machine 2 is reset so as to be released to another user in step S31, and then the processing is ended.

On the other hand, if the discrimination in step S28 is NO, then the processing advances to step S13 so that the processing described above is repeated.

Further, if the discrimination in step S26 of FIG. 3 is YES, then a demand for a total amount of money of the basic charge and the excess charge is sent to the user in step S32. Then, it is discriminated in step S33 whether or not the total amount of money is paid by the user. If the discrimination in step S33 is YES as a result of payment by the user, then the processing advances to step S29 of FIG. 4 so that the processing beginning with step S29 described hereinabove is performed. However, if the discrimination in step S33 is NO, then the processing advances to step S13 so that the processing beginning with step S13 is repeated.

It is to be noted that, whether the method of the payment by the user uses a system for payment wherein a card is used, almost all of the steps required for a case wherein the user does not pay the predetermined charge need not be executed.

While a preferred embodiment of the present invention has been described using specific terms, such description is for illustrative purposes only, and it is to be understood that changes and variations may be made without departing from the spirit or scope of the following claims.

## Claims

1. A management system for a fee-based service wherein a particular equipment (2) of a business unit provided at a predetermined service providing place (3-A to 3-C, 3-1 to 3-3) is used with payment of a charge by a user who comes to the service providing place (3-A to 3-C, 3-1 to 3-3) at which the equipment (2) is provided, **characterized in that** it comprises:
a user side communication terminal (4);
a business unit side communication terminal (1) connectable to said user side communication terminal (4) over a communication line (6); and
control and management means (7) for communicating with said user side communication terminal (4) through said business unit side communication terminal (1), controlling the particular equipment (2) and managing a service by which the particular equipment (2) is utilized;
said control and management means (7) being operable to start the service in which the particular equipment (2) is utilized when the user inputs at least address information of said user side communication terminal (4) and pays a predetermined charge for the service and issue, when an event of the service comes to an end, a notification of the end of the event to said user side communication terminal (4), through which the address information has been inputted, through said business unit side communication terminal (1).

2. A management system for a fee-based service as set forth in claim 1, **characterized in that** said control and management means (7) permits, if the user receiving the notification of the end of the event of the service comes to the service providing place (3-A to 3-C, 3-1 to 3-3) and inputs unique user identification information determined in advance, the user to acquire a result of the service from the particular equipment (2).

3. A management system for a fee-based service as set forth in claim 2, **characterized in that** the user identification information includes address information regarding said user side communication terminal (4).

4. A management system for a fee-based service as set forth in claim 3, **characterized in that** said user side communication terminal (4) is a mobile communication terminal.

5. A management system for a fee-based service as set forth in claim 3, **characterized in that** said user side communication terminal (4) is a portable digital assistant having a communication function.

6. A management system for a fee-based service as set forth in any one of claims 1 to 5, **characterized in that** the user identification information includes address information regarding said user side communication terminal (4) and a unique number determined by the user individually.

7. A management system for a fee-based service as set forth in any one of claims 1 to 6, **characterized in that** said control and management means (7) imposes, if the user does not acquire the result of the service from the particular equipment (2) after the notification of the end of the event is issued, an excess charge corresponding to a period of time from a point of time when a predetermined time elapses after the issuance of the notification of the end of the event to another point of time at which the user inputs the user identification information, and permits the user to acquire the result of the service from the particular equipment (2) after the user pays the excess charge.

8. A management system for a fee-based service as set forth in claim 7, **characterized in that** said control and management means (7) increases the excess charge stepwise in accordance with the excess time.

9. A management system for a fee-based service as set forth in claim 7 or 8, **characterized in that** said control and management means (7) issues a notification of a request for reception of the result of the service to the user and alarm information representing imposition of the excess charge to said user side communication terminal (4) at predetermined intervals of time from the point of time at which the predetermined time elapses after the issuance of the notification of the end of the event.

10. A management system for a fee-based service as set forth in any one of claims 7 to 9, **characterized in that** said control and management means (7) places, when a predetermined time determined in advance elapses while the user does not acquire the result of the service after the end of the event, the result of the service into custody to return the particular equipment (2) into a state wherein another user can utilize the particular equipment (2).

11. A management system for a fee-based service as set forth in any one of claims 1 to 10, **characterized in that** payment of the charge to said control and management means (7) is performed by an accounting system (21) through said communication line (6).

12. A management system for a fee-based service as set forth in any one of claims 1 to 10, **characterized in that** payment of the charge to said control and management means (7) is performed through use of a cash card, a credit card, an electronic payment system or a prepaid card or by throwing in money.

13. A management system for a fee-based service as set forth in claim 11 or 12, **characterized in that** said user side communication terminal (4) sends a notification at least of an identification number unique to the user and an account number of a financial organ from which a predetermined amount of money is to be paid to said business unit side communication terminal (1).

14. A management system for a fee-based service as set forth in any one of claims 1 to 13, **characterized in that** said control and management means (7) normally grasps a utilization situation of the service and stores information regarding the utilization situation into said storage means (24).

15. A management system for a fee-based service as set forth in any one of claims 1 to 14, **characterized in that** said control and management means (7) manages a plurality of equipments (2) by the same business unit provided in different districts.

16. A management system for a fee-based service as set forth in claim 15, **characterized in that** said control and management means (7) issues, if an inquiry is received from said user side communication terminal (4) through said communication line (6), a notification of information regarding an equipment (2) which can be utilized to said user side communication terminal (4) through said business unit side communication terminal (1).

17. A management system for a fee-based service as set forth in claim 16, **characterized in that** said control and management means (7) assures, if an equipment (2) which can be utilized on a date designated by the user is present, the equipment (2) as a reserved equipment (2) for the user.

18. A management system for a fee-based service as set forth in claim 17, **characterized in that** said control and management means (7) issues, when the reservation is completed, a notification of a result of the reservation to said user side communication terminal (4) through said business unit side communication terminal (1).

19. A management system for a fee-based service as set forth in claim 17 or 18, **characterized in that** said control and management means (7) displays, if the utilization reservation is established, information that the equipment (2) is reserved.

20. A management system for a fee-based service as set forth in any one of claims 17 to 19, **characterized in that** said control and management means (7) sets a reservation charge separately for the request for reservation.

21. A management system for a fee-based service as set forth in any one of claims 16 to 20, **characterized in that** said control and management means (7) imposes a reservation cancellation fine if the user does not utilize the reserved service even after a time determined in advance elapses from a predetermined hour of the date of the reservation by the user.

22. A management system for a fee-based service as set forth in any one of claims 1 to 21, **characterized in that** said control and management means (7) includes a failure situation discrimination section (27) for supervising a utilization situation of services to discriminate presence or absence of a service which is in failure, and issues a notification for request for maintenance of the service to a communication terminal of a predetermined maintenance business unit (20) for the predetermined service which has been discriminated to be in failure.

23. A management system for a fee-based service as set forth in any one of claims 1 to 22, **characterized in that** said communication terminal of said business unit (20) has a server function and forms an application service provider.

24. A management system for a fee-based service as set forth in any one of claims 1 to 23, **characterized in that** said control and management means (7) includes user information inputting means (8), user information storage means (9), service function driving control means (10), timer means (11), user identification information confirmation means (12), payment confirmation means (13) for confirming reception of payment of a predetermined charge, service operation means (14) operable by the user, information origination means (15) for originating predetermined information to said user side communication terminal (4), application storage means (16) in which a program for causing a function of a service to be executed is stored, and control means (17) for controlling some or all of the components of said control and management means (7).

25. A management system for a fee-based service as set forth in claim 24, **characterized in that** said control and management means (7) further includes situation discrimination means (23) for discriminating a situation of the service at present, and storage means (24) for storing a result of the discrimination by said situation discrimination means (23).

26. A management system for a fee-based service as set forth in claim 24 or 25, **characterized in that** said control and management means (7) further includes imposed charge amount calculation means (19) for calculating an excess charge other than a basic charge regarding utilization of the service.

27. A management system for a fee-based service as set forth in claim24, **characterized in that** at least said information origination means (15) is provided in a server possessed by a business unit.

28. A management system for a fee-based service as set forth in claim 25, **characterized in that** said situation discrimination means (23) for discriminating a situation of the service at present and said storage means (24) for storing a result of the discrimination by said situation discrimination means (23) are provided in a server possessed by a business unit.

29. A management system for a fee-based service as set forth in any one of claims 12 to 28, **characterized in that** the particular equipment of the business unit is a washing machine (2) of a coin laundry (3-A to 3-C, 3-1 to 3-3), and the fee-based service is that the user uses the washing machine (2) with payment of a charge to wash the washing.

30. A management method for a fee-based service for controlling, by a control and management system (7), a particular equipment (2) of a business unit provided at a predetermined service providing place (3-A to 3-C, 3-1 to 3-3) so that a user can use the particular equipment (2) with payment of a charge and managing the service by said control and management system (7), comprising the steps of:
starting, when the user inputs at least address information of a user side communication terminal (4) and pays a predetermined charge for the service to said control and management system (7), operation of the service in which the particular equipment (2) is utilized and locking the particular equipment (2) to inhibit use of the particular equipment (2) by another person;
issuing, when an event of the service comes to an end, a notification of the end of the event to said user side communication terminal (4), through which the address information has been inputted, through a business unit side communication terminal (1); and
permitting, if the user inputs unique user identification information to said control and management system (7), the user to acquire a result of the service from the particular equipment (2).

31. A management method for a fee-based service as set forth in claim 30, **characterized in that** it further comprises the step of imposing, if the user does not acquire the result of the service from the particular equipment (2) after the notification of the end of the event is issued, an excess charge corresponding to a period of time from a point of time when a predetermined time elapses after the issuance of the notification of the end of the event to another point of time at which the user inputs the user identification information.

32. A management method for a fee-based service as set forth in claim 31, **characterized in that** a notification of a request for reception of the result of the service to the user and alarm information representing imposition of the excess charge are issued to said user side communication terminal (4) at predetermined intervals of time from the point of time at which the predetermined time elapses after the issuance of the notification of the end of the event.

33. A management method for a fee-based service as set forth in any one of claims 30 to 32, **characterized in that** it further comprises the step of placing, when a predetermined time determined in advance elapses while the user does not acquire the result of the service after the end of the event, the result of the service into custody to return the particular equipment (2) into a state wherein another user can utilize the particular equipment (2).

34. A management method for a fee-based service as set forth in any one of claims 30 to 33, **characterized in that** a plurality of equipments (2) by the same business unit provided in different districts are managed by the same control and management system (7).

35. A management method for a fee-based service as set forth in claim 34, **characterized in that** it further comprises the step of issuing, if an inquiry is received from said user side communication terminal (4) through a communication line (6), a notification of information regarding a place of an equipment (2) which can be utilized to said user side communication terminal (4) through said communication line (6).

36. A management method for a fee-based service as set forth in claim 35, **characterized in that** it further comprises the step of assuring, if a place of a service which can be utilized on a date designated by the user is present, the equipment (2) at the place of the service as a reserved equipment (2) for the user.

37. A management method for a fee-based service as set forth in claim 36, **characterized in that** it further comprises the step of issuing, if the utilization reservation is established, a notification of a result of the reservation to said user side communication terminal (4) through said communication line (6) and displaying information that the equipment (2) is reserved.

38. A management method for a fee-based service as set forth in claim 37, **characterized in that** it further comprises the step of calculating a reservation charge separately.

39. A management method for a fee-based service as set forth in claim 38, **characterized in that** it further comprises the step of imposing a reservation cancellation fine if the user does not utilize the reserved service even after a time determined in advance elapses from a predetermined hour of the date of the reservation by the user.

40. A management method for a fee-based service as set forth in any one of claims 30 to 39, **characterized in that** it further comprises the steps of supervising a utilization situation of services by said control and management system (7) to discriminate presence or absence of a service which is in failure, and issuing a notification for request for maintenance of the service to a communication terminal of a predetermined maintenance business unit (20) for the predetermined service which has been discriminated to be in failure.

41. A recording medium on which a program is stored for controlling by a control and management system (7), a particular equipment (2) of a business unit provided at a predetermined service providing place (3-A to 3-C, 3-1 to 3-3) so that a user can use the particular equipment (2) with payment of a charge and managing the service by said control and management system (7), **characterized in that** the program comprises the steps of:
starting, when the user inputs at least address information of a user side communication terminal (4) and pays a predetermined charge for the service to said control and management system (7), operation of the service in which the particular equipment (2) is utilized and locking the particular equipment (2) to inhibit use of the particular equipment (2) by another person;
issuing, when an event of the service comes to an end, a notification of the end of the event to said user side communication terminal (4), through which the address information has been inputted, through a business unit side communication terminal (1); and
permitting, if the user inputs unique user identification information to said control and management system (7), the user to acquire a result of the service from the particular equipment (2).
